# EUROPÄISCHE PATENTSCHRIFT

(11) **EP 0 975 536 B1**
(45) Veröffentlichungstag und Bekanntmachung des Hinweises auf die Patenterteilung: **21.11.2001**
(21) Anmeldenummer: 98914698.0
(22) Anmeldetag: 16.04.1998
(51) Int. Cl.: B65G 1/137

(54) **VORRICHTUNG ZUR KONTROLLE VON ZU EINEM KOMMISSIONIERAUFTRAG GEHÖRENDEN STÜCKGÜTERN**
DEVICE FOR CONTROLLING ITEMS BELONGING TO A COMMISSIONING ORDER
DISPOSITIF DE CONTROLE DE MARCHANDISES DE DETAIL FAISANT PARTIE D'UN ORDRE DE PREPARATION DES COMMANDES

(30) Priorität: 17.04.1997 AT 66397
(43) Veröffentlichungstag der Anmeldung: 02.02.2000
(73) Patentinhaber: Knapp Logistik Automation GmbH, 8075 Hart bei Graz (AT)
(72) Erfinder: WÜNSCHER, Eduard, A-8075 Hart bei Graz (AT); FREUDELSPERGER, Karl, A-8075 Hart bei Graz (AT)
(74) Vertreter: Weinzinger, Arnulf, Dipl.-Ing.
(86) Internationale Anmeldenummer: AT9800098
(87) Internationale Veröffentlichungsnummer: WO9847790

(56) Entgegenhaltungen:
- EP-A- 0 572 830
- EP-A- 0 645 322
- WO-A-85/02282
- DE-A- 2 340 209
- US-A- 5 406 770

## Beschreibung

Die Erfindung betrifft eine Vorrichtung zur Kontrolle von zu einem Kommissionierauftrag gehörenden, auf einer Förderstrecke transportierten Stückgütern hinsichtlich Produktart und Anzahl der Stückgüter gemäß dem einleitenden Teil von Anspruch 1.

Derzeit werden in Großwarenlagern Stückgüter gemäß Kommissionieraufträgen manuell, halbautomatisch oder automatisch zu Warengruppen zusammengestellt und in Behältern gesammelt. Zur Kontrolle werden die Behälter zu Wiegeeinrichtungen im Versandbereich geleitet, um einen Vergleich des Nettogewichtes des Behälterinhaltes mit der Summe der Einzelgewichte der Stückgüter herbeizuführen. Da vielfach, insbesondere im pharmazeutischen Größwarenhandel, Produkte mit weniger als 10 g im Umlauf sind, kann es häufig zu Fehlern bei den Kontrollen kommen. Eine Überprüfung der Produktart ist durch den Wiegevorgang schwer möglich bzw. wird auch schwierig, da viele unterschiedliche Produkte etwa das gleiche Gewicht aufweisen. Es besteht somit ein Bedarf an einer Kontrolle, die eine sichere Überprüfung von Produktart und Anzahl der Produkte ermöglicht.

Aus der DE 691 10 852 T2 (entsprechend EP 494014B) ist ein Verfahren zum Kommissionieren von Stückgütern bekannt, die von Kommissionierern händisch aus Regalfächern entnommen, mittels einer Barcode-Leseeinrichtung identifiziert, gewogen und anschließend in einen leeren oder bereits teilweise gefüllten Behälter geleert werden. Die Behälter werden auf einer Hauptförderstrecke herantransportiert, um auf eine von mehreren Nebenförderstrecken geschoben zu werden, die aus nicht angetriebenen Rollen bestehen; neben jeder Nebenförderstrecke ist eine händisch verschiebbare Kontrolleinrichtung angeordnet, in welcher die Identifizierung und Wiegung der Stückgüter durch den Kommissionierer erfolgt. Die bei der Kontrolleinrichtung ankommenden Behälter werden ebenfalls mittels einer Barcode-Leseeinrichtung identifiziert, und die Überwachung der gesamten ermittelten Daten erfolgt durch einen Zentralrechner, um die Übereinstimmung der in den Behältern kommissionierten Stückgüter mit einem Kommissionierauftrag zu überwachen; an jeder Kontrolleinrichtung ist dabei zusätzlich ein Bildschirm mit Tastatur zur interaktiven Kommunikation des Kommissionierers mit dem Zentralrechner vorgesehen. Bei diesem Verfahren findet somit beim Kommissioniervorgang selbst eine Kontrolle der Stückgüter statt, wobei die Vorgangsweise verhältnismäßig aufwendig und trotzdem unsicher ist.

In der EP 572 830 B1 ist ein Verfahren zum Identifizieren, Etikettieren und Zielsteuern von Waren am Wareneingang und/oder am Warenausgang eines Warenlagers beschrieben. Unter "Waren" werden hierbei Kartons gleicher oder verschiedener Größe verstanden, die Stückgüter enthalten. Diese Kartons durchlaufen auf einer Förderstrecke eine Kontrollstation, in der eine Plausibilitätsprüfung stattfindet, ob nämlich die zuvor ermittelte Identifizierung, das Gewicht und das Volumen in sich stimmig sind. Zur Identifizierung ist der Förderstrecke eine Erkennungseinrichtung in Form eines Etikettenlesers zugeordnet, der vorzugsweise aus sechs Scannern besteht, und der die Waren bzw. Kartons abtastet und die auf einem Etikett aufgedruckten Informationen ausliest. Die ausgelesenen Ist-Daten werden einem Rechner zwecks Vergleich mit Soll-Daten zugeführt. Eine Kontrolle der in den Kartons enthaltenen Stückgüter selbst findet bei diesem Verfahren jedoch nicht statt, so daß auch hier die eingangs erläuterten Nachteile zutreffen.

Aus der DE 23 40 209 A ist eine Kommissioniereinrichtung bekannt, bei der im Zuge des Kommissionierens in Kommissionierstationen Waren, die auf einem Förderer transportiert werden, an einem seitlich des Förderers angeordneten Kodetafelleser vorbeigeführt werden, um Kodetafeln an den Waren induktiv auszulesen.

In der US 5 406 770 A ist schließlich eine gattungsgemäße Vorrichtung geoffenbart, die einen optischen Scanner aufweist, der unterhalb eines Fensters eines Scannertisches an einer Förderstrecke angeordnet ist; die zu kontrollierenden Stückgüter werden über den Scannertisch bewegt und dabei vom Scanner von unten her abgetastet.

Aufgabe der Erfindung ist die Schaffung einer Vorrichtung der eingangs genannten Art, mit welcher eine genaue, insbesondere automatische Kontrolle der einzelnen Stückgüter bei deren Kommissionierung durchgeführt werden kann, um so fehlerhafte Warengruppen, die nicht exakt einem Kommissionierauftrag entsprechen, sicher feststellen zu können.

Zur Lösung dieser Aufgabe sieht die Erfindung eine Vorrichtung mit den in Anspruch 1 angeführten Merkmalen vor; vorteilhafte Ausführungsformen und Weiterbildungen sind in den Unteransprüchen angegeben. Durch die Erfindung ist es möglich, eine sichere Kontrolle der Stückgüter zu erzielen, wobei die Erfindung in vorteilhafter Weise nicht nur bei neuen, sondern auch bei bereits bestehenden Kommissionieranlagen zum Einsatz gelangen kann, um Fehllieferungen komplett auszuschließen, was insbesondere bei pharmazeutischen Produkten von großer Wichtigkeit ist. Im Vergleich zu einer von Hand aus durchgeführten Kontrolle ist nur ein minimaler Zeitaufwand erforderlich, wodurch nicht nur Arbeitszeit schlechthin, mit den damit verbundenen Kosten, eingespart werden kann, sondern Kommissionieraufträge noch rascher - und sicher - erledigt werden können. Im Fall einer erfindungsgemäß eingesetzten Rutsche, die beispielsweise um 30° abfallen kann, können sich die Stückgüter an den Erkennungseinrichtungen vorbeibewegen, ohne daß hierfür ein gesonderter Antrieb, z.B. Vibrationsantrieb, erforderlich wäre, dessen konstruktiver Aufbau dem Erkennungsvorgang möglicherweise optisch im Wege wäre. In ähnlicher Weise kann im Fall einer erfindungsgemäß eingesetzten Röllchenbahn für diese ein Gefälle vorgesehen werden, so daß auch bei dieser Variante kein zusätzlicher Antrieb erforderlich ist. Im übrigen kann hier zwischen benachbarten Rollen hindurch auch die Unterseite der Stückgüter kontrolliert werden, wogegen die Oberseite und die Längsseiten der Stückgüter von vornherein frei zugänglich sind.

Im Hinblick auf eine rasche, selbsttätige und sichere Kontrolle kann mit Vorteil vorgesehen werden, daß der Förderstrecke eine Behälter-Entleerstation zugeordnet ist und die Förderstrecke eine Ausricht- und Vereinzelungsstation aufweist, nach der in Förderrichtung der die Durchsicht ermöglichende Förderer mit den Erkennungseinrichtungen folgt. Durch diese Anordnung können die Stückgüter für den eigentlichen Kontrollvorgang durch ihr Vereinzeln und Ausrichten in Längs- oder Querausrichtung dahingehend günstig vorbereitet werden, daß Fehlablesungen durch die Erkennungseinrichtungen ausgeschlossen sind. Dabei werden vorhergehend die bereits in einem Behälter entsprechend einem Kommissionierauftrag zusammengestellten Stückgüter aus dem Behälter geleert, bevor jedes von ihnen kontrolliert wird. Vor der Kontrolle können die Stückgüter, wie oben angeführt, vereinzelt bzw. ausgerichtet werden. Eine derartige Vorgangsweise ermöglicht die Zusammenstellung der Stückgüter-Gruppen entsprechend den jeweiligen Kommissionieraufträgen in üblicher Weise und nichtsdestoweniger die angestrebte sichere Kontrolle hinsichtlich etwaiger Fehler bei der Kommissionierung in automatischer Weise. Die Kontrolle der einzelnen Stückgüter selbst ermöglicht andererseits eine praktisch 100%-ige Sicherheit in der Überprüfung der Richtigkeit der zusammengestellten Warengruppen. Das Ausrichten der Stückgüter vor dem Kontrollieren in einer bestimmten Längs- oder Querausrichtung ist aber - wenngleich bevorzugt - nicht unbedingt notwendig, da es beispielsweise mehrdirektionale elektronische Scanner gibt, die auch bei nicht längs-ausgerichteten Stückgütern deren Strichcode erkennen können.

Eine besonders vorteilhafte Ausbildung sieht vor, daß die Rutsche einen V-förmigen Querschnitt aufweist. Hierbei ist es zweckmäßig, wenn die Schenkel der Rutsche zueinander einen Winkel von 90° einschließen. Hierdurch kommen die Stückgüter mit zwei ihrer Längsseitenflächen zum satten Aufliegen auf den beiden Schenkeln der V-förmigen Rutsche, womit ideale Bedingungen für eine optische Identifizierung gegeben sind.

Die Stückgüter können an sich, wenn das Kontrollergebnis negativ ist, anschließend hinsichtlich Produktart bzw. Anzahl korrigiert werden. Danach können auch die zunächst als fehlerhaft festgestellten Stückgüter-Gruppen sofort ausgeliefert werden, um so dem Kommissionierauftrag zu entsprechen, ohne daß die Kommissionierung neu begonnen werden müßte.

Von besonderem Vorteil im Sinne einer kompletten Automatisierung ist es jedoch weiters, wenn nach den Erkennungseinrichtungen eine Einrichtung zum automatischen Ausschleusen der Stückgüter angeordnet ist. Hier werden Stückgüter mit einem negativen Kontrollergebnis automatisch ausgeschleust, wodurch eine zeitaufwendige nachfolgende, insbesondere händische Suche nach den fehlerhaften Stückgütern entfallen kann.

Für den rationellen Ablauf der Kommissionierung auch im Zuge der Kontrolle können die Stückgüter nach der Kontrolle in einen Behälter überführt werden. Hierdurch können die Stückgüter bei positivem Kontrollergebnis sofort als komplette Warengruppe, z.B. zur Verpackung und Auslieferung, weitergeleitet werden. Dabei ist es zur Verringerung der Anzahl der im Umlauf befindlichen Behälter auch günstig, wenn die Stückgüter nach der Kontrolle in den sie ursprünglich enthaltenden Behälter überführt werden.

Um den Kontrollvorgang effektiv zu verkürzen, können auch mehrere Stückgüter gleichzeitig kontrolliert werden.

Es hat sich bei Versuchen als besonders günstig erwiesen, wenn als Erkennungseinrichtungen zumindest zwei Scanner oder Videokameras einander gegenüberliegend angeordnet sind. Damit können Aufschriften oder Codes an den Stückgütern bzw. sogar deren gesamtes Erscheinungsbild mit gespeicherten Vergleichsinformationen verglichen werden, um so die Richtigkeit der Stückgüter einfach und absolut sicher feststellen zu können. Es hat sich als zweckmäßig erwiesen, wenn vier Scanner oder Videokameras einander paarweise gegenüberliegend angeordnet sind.

Für den Fall, daß bei eher schlecht zu identifizierenden Aufdrucken an den Stückgütern bei deren Bewegung Fehlablesungen auftreten könnten, ist es günstig, wenn im Bereich der Erkennungseinrichtungen eine Stoppeinrichtung für die Stückgüter angeordnet ist. Hierbei ist es besonders vorteilhaft, wenn die Stoppeinrichtung einen Elektromagneten aufweist. Zum Anhalten der Stückgüter braucht der Elektromagnet nur kurzzeitig in Betrieb gesetzt zu werden, so daß praktisch keine Verzögerung des Durchlaufs der Stückgüter auftritt.

Gemäß einer bevorzugten Ausführungsform der Erfindung ist vorgesehen, daß die Ausricht- und Vereinzelungsstation aus mehreren, beispielsweise seitlich zueinander versetzten, mit unterschiedlichen Geschwindigkeiten transportierenden Förderstrecken gebildet ist. Mit dieser Anordnung wurden in der Praxis sehr gute Ergebnisse erzielt, wobei die Vereinzelung und Ausrichtung der Stückgüter in relativ kurzer Zeit erfolgt. Dabei ist es für die Ausrichtung der Stückgüter beim Vereinzeln auch vorteilhaft, wenn die erste(n) Förderstrecke(n) mit Leitblechen zum Überleiten der Stückgüter zur (jeweils) nachfolgenden Förderstrecke versehen ist bzw. sind. Weiters ist es hinsichtlich der Vereinzelung günstig, wenn die Fördergeschwindigkeiten von Förderstrecke zu Förderstrecke zunehmen.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. Es zeigen:
die Fig.1 und 2 je eine schematische Draufsicht auf eine Vorrichtung zur Durchführung des erfindungsgemäßen Verfahrens;
Fig.3 einen Teil der Vorrichtung nach Fig.1 in Vorderansicht teilweise im Querschnitt, gemäß der Linie III-III in Fig.1 bzw. Fig.2;
Fig.4 einen Teil einer weiteren Vorrichtung in Seitenansicht; und
Fig.5 eine schematische Draufsicht auf ein Beispiel einer der Kontrollstation nachgeordneten Einrichtung zum automatischen Ausschleusen von Stückgütern.

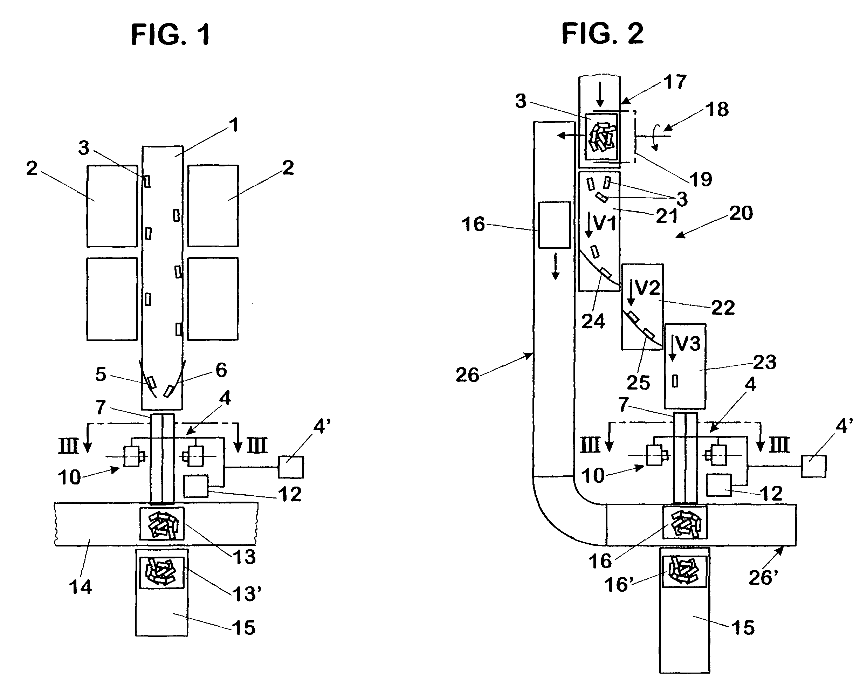

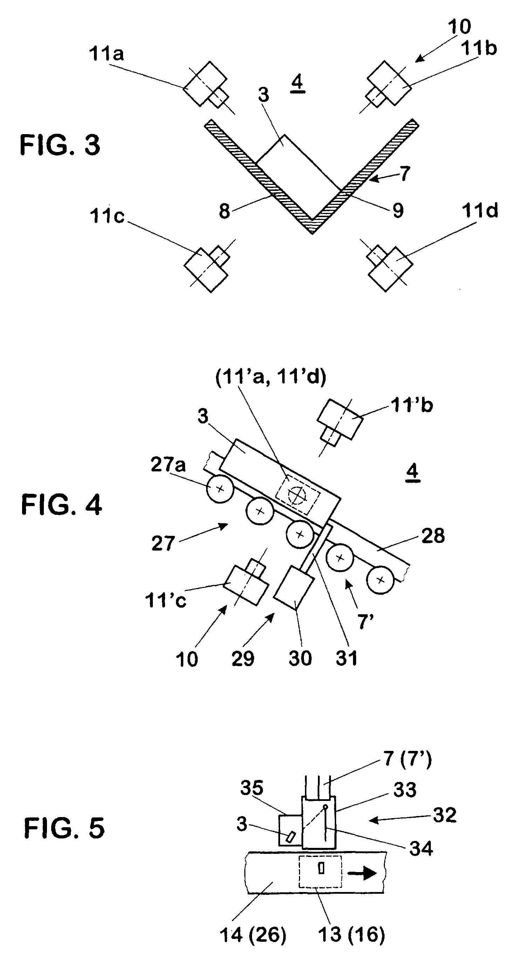

In Fig.1 bezeichnet 1 eine Förderstrecke, welche von Automaten 2 gemäß einem Kommissionierauftrag einzeln und aufeinanderfolgend ausgegebene Stückgüter 3 zu einer Kontrollstation 4 transportiert, in welcher die Stückgüter 3 hinsichtlich Produktart und Anzahl kontrolliert werden. Bevor die Stückgüter 3 zur Kontrollstation 4 gelangen, werden sie durch Leitbleche 5, 6 zur Mitte der Förderstrecke 1 geleitet, um auf eine in Transportrichtung um ca. 30° abwärts geneigte Rutsche 7 zu fallen, die wie aus Fig.3 ersichtlich einen V-förmigen Querschnitt aufweist. Die Leitbleche 5, 6 können entfallen, wenn die Rutsche 7 und die Förderstrecke 1 die gleiche Breite aufweisen.

Die Rutsche 7 besteht zumindest teilweise aus einem transparenten Material, vorzugsweise Glas bzw. transparentem Kunststoff, und ihre Schenkel 8, 9 sind zueinander in einem Winkel von 90° angeordnet, so daß zwei Längsseitenflächen der quaderförmigen Stückgüter 3 satt aufliegen können. Etwa in der Längsmitte der Rutsche 7 sind quer zu deren Längsrichtung Erkennungseinrichtungen 10, beispielsweise vier Scanner, insbesondere Barcode-Scanner, beispielsweise mehrdirektionale Barcode-Scanner, die auch einen querliegenden Barcode erkennen können, oder vier Videokameras 11a bis 11d (s. auch Fig.3), angeordnet, deren optische Achsen senkrecht auf die Schenkel 8, 9 bzw. auf die vier Längsseitenflächen der Stückgüter 3 ausgerichtet sind. Auf diese Weise kann entweder ein Barcode, eine Marke, ein Schriftzug, eine Abbildung auf den Längsseitenflächen und/oder der Umriß der Stückgüter 3 optisch erfaßt und in elektrische Signale umgewandelt werden, die an einen Rechner 4' weitergeleitet werden. Dabei kann vorgesehen werden, immer nur eines der Stückgüter 3 - von bestimmten Seiten oder allseitig - zu erfassen, es können - bei entsprechender Eignung etwa der Videokameras 11 oder der Scannereinrichtungen (z.B. mehrere Scannereinheiten in einer Ebene nebeneinander) - auch gleichzeitig mehrere Stückgüter erfaßt werden; wesentlich ist, daß jedes der Stückgüter 3 erfaßt wird. Mit Hilfe eines im Rechner 4' gespeicherten Barcode- oder Schriftzeichen- oder Bild-Erkennungsprogrammes, das gegebenenfalls auch zur gleichzeitigen Erkennung mehrerer Stückgüter geeignet ist, kann dadurch sowohl die Produktart als auch die Anzahl der Stückgüter 3 kontrolliert und mit einem Kommissionierauftrag verglichen werden. Das Ergebnis kann dem Bedienungspersonal auf einem im Bereich der Rutsche 7 angebrachten Bildschirm 12 angezeigt werden.

Von der Rutsche 7 fallen die Stückgüter 3 in einen Behälter 13, der auf einer Förderstrecke 14 transportiert und bei der Rutsche 7 angehalten wird.

Stimmt das durch den Rechner 4' ermittelte Ergebnis der Überprüfung hinsichtlich Produktart und Anzahl der Stückgüter 3 mit dem Kommissionierauftrag überein, so wird der Behälter 13 zu einer Ausgabe- bzw. Verpackungsstation (nicht dargestellt) über die Förderstrecke 14 weitergeleitet. Besteht keine Übereinstimmung, so wird der Behälter 13' auf eine Abstellfläche 15 ausgeschleust, und das Bedienungspersonal kann aufgrund der auf dem Bildschirm 12 angezeigten Daten eine Korrektur des Inhaltes des Behälters 13' vornehmen und gegebenenfalls über eine Tastatur (nicht dargestellt) die erfolgte Korrektur dem Rechner übermitteln.

Bei dem in Fig.2 gezeigten Ausführungsbeispiel gelangen mit Stückgütern 3 gemäß einem Kommissionierauftrag gefüllte Behälter 16 über eine Förderstrecke 17, z.B. eine Rollenbahn oder ein Förderband, zu einer Behälter-Entleerungsstation 18, an der die Behälter 16 angehalten und entweder von Hand aus oder bevorzugt automatisch, z.B. über eine Kippleiste oder aber mit Hilfe von Greifeinrichtungen etc. (nicht im Detail dargestellt), allgemein mittels einer Kippvorrichtung 19, gekippt werden, um ihren Inhalt, d.h. die Stückgüter 3, auf eine Förderstrecke einer Ausricht- und Vereinzelungsstation 20 zu entleeren. Die mit strichpunktierten Linien dargestellte Kippvorrichtung 19 hebt den jeweiligen Behälter 16 beispielsweise an der hinteren Bodenkante hoch und kippt ihn über die vordere Bodenkante; die Kippvorrichtung 19 kann den Behälter 16 auch an seinem Bund hochheben, zur nachfolgenden Ausricht- und Vereinzelungsstation 20 befördern und dort umkippen.

Die Ausricht- und Vereinzelungsstation 20 besteht im gezeigten Beispiel aus drei seitlich zueinander versetzten Förderstrecken 21, 22 und 23, wobei deren Fördergeschwindigkeiten V1, V2, V3 von der vordersten Förderstrecke 21, auf welche das Stückgut 3 aus den Behältern 16 entleert wird, bis zur letzten Förderstrecke 23 zunehmen, wobei die Stückgüter 3 am Ende der vordersten und mittleren Förderstrecke 21, 22 jeweils durch Leitbleche 24, 25 zur nachfolgenden Förderstrecke 22, 23 umgeleitet werden. Vorzugsweise beträgt die zweite Fördergeschwindigkeit V2 das Doppelte der ersten Fördergeschwindigkeit V1, und die dritte Fördergeschwindigkeit V3 ist wiederum doppelt so hoch wie die zweite Fördergeschwindigkeit V2. Durch diese Maßnahme kann eine rasche Ausrichtung der Stückgüter der Länge nach, in der Art eines "Mitreißens", und eine Vereinzelung der Stückgüter 3 erzielt werden.

Selbstverständlich ist es auch möglich, die Vereinzelung der Stückgüter 3 auf in einer Linie hintereinander ausgerichteten, jeweils höhere Fördergeschwindigkeiten aufweisenden Förderstrecken durchzuführen, wobei gegebenenfalls auch trichterartig angeordnete Leitbleche die Vereinzelung unterstützen können.

Die Ausrichtung und Vereinzelung der Stückgüter 3 könnte ferner in der Ausricht- und Vereinzelungsstation 20 auch manuell, insbesondere auf einer relativ langsam laufenden Förderstrecke (nicht dargestellt), erfolgen; auch kann sie bei Vorsehen entsprechender Erkennungseinrichtungen 10, die mehrere Stückgüter in beliebigen Lagen aufgrund von deren Umrissen sowie Aufdrucken feststellen können, überhaupt entfallen - die Erkennungseinrichtungen 10 müssen dann jedenfalls die gesamte Breite der Förderstrecke in ihrem "Blickwinkel" haben.

Auf die Ausricht- und Vereinzelungsstation 20 folgt, gemäß Fig. 2 wiederum die Kontrollstation 4 mit den Erkennungseinrichtungen 10, deren Aufbau und Funktionsweise bereits vorstehend anhand der Figuren 1 und 3 beschrieben wurde, so daß sich eine neuerliche Beschreibung erübrigen kann.

Von der Rutsche 7 der Kontrollstation 4 fallen die Stückgüter 3 wieder in den Behälter 16, der zwischenzeitlich von der Entleerungsstation 18 auf eine Förderstrecke 26 manuell oder vorzugsweise automatisch, beispielsweise mit Hilfe der entsprechend für die Querverschiebung ausgebildeten Kippvorrichtung 19 oder aber einer eigenen Querverschubvorrichtung, etwa mit einem pneumatisch betätigten Schieber (nicht gezeigt), aufgesetzt, zur Rutsche 7 gebracht und bei dieser angehalten wurde. (Eine Kippvorrichtung 19, die hier eingesetzt werden könnte, ist beispielsweise jene gemäß der DE 30 45 145 A1.)

Stimmt das durch den Rechner 4' ermittelte Ergebnis der Überprüfung hinsichtlich Produktart und Anzahl der Stückgüter 3 mit dem Kommissionierauftrag überein, so wird der Behälter 16 mit den Stückgütern 3 dann zu einer Ausgabe- bzw. Verpackungsstation (nicht dargestellt) über eine Förderstrecke 26' weitergeleitet. Besteht keine Übereinstimmung, so wird der Behälter 16' wieder auf eine Abstellfläche 15 ausgeschleust, und das Bedienungspersonal kann aufgrund der auf dem Bildschirm 12 angezeigten Daten wiederum eine Korrektur des Inhaltes des Behälters 16' vornehmen und gegebenenfalls über eine Tastatur (nicht dargestellt) die erfolgte Korrektur dem Rechner 4' mitteilen.

Die Fig.4 veranschaulicht eine Variante einer Kontrollstation 4 mit einer modifizierten "Rutsche" 7' in Form einer geneigten Röllchenbahn 27. Die Erkennungseinrichtungen 10 umfassen zwei einander gegenüberliegende (Barcode-)Scanner oder Videokameras 11'b, 11'c, deren optische Achse zwischen zwei Röllchen 27a der Röllchenbahn 27 verläuft. Überdies können zwei Scanner oder Videokameras 11'a, 11'd mit horizontalen optischen Achsen vorgesehen werden, wie in Fig.4 mit gestrichelten Linien angedeutet ist. Es sei hier erwähnt, daß auch beim Ausführungsbeispiel gemäß Fig.3 anstelle von vier Barcode-Scannern oder Videokameras 11a - 11d nur zwei (oder drei) Barcode-Scanner oder Videokameras eingesetzt werden können.

Seitlich der Röllchenbahn 27 und zur Längsführung der Stückgüter 3 sind gemäß Fig.4 Leitbleche 28, vorzugsweise aus transparentem Material, angeordnet. Um eine exakte Ablesung bzw. optische Erkennung im Ruhezustand der Stückgüter 3 zu ermöglichen, ist hier überdies eine Stoppeinrichtung 29 vorgesehen, die beispielsweise mit einem Elektromagneten 30 mit Tauchkern 31 ausgebildet ist, der zwischen zwei benachbarten Röllchen 27a nach den Erkennungseinrichtungen 10 hineinragt. Der Elektromagnet 30 wird z.B. durch das Signal einer Lichtschranke (nicht dargestellt) kurzzeitig erregt, so daß der Durchlauf der Stückgüter 3 nur geringfügig verzögert wird.

Anstelle der Rutschen 7, 7' können auch zwei Förderbänder (nicht dargestellt) hintereinander angeordnet vorgesehen sein, wobei an der Übergangsstelle zwischen den beiden Förderbändern ein genügend breiter Spalt freigelassen wird, um eine optische Abtastung der Stückgüter durch den Spalt hindurch vornehmen zu können.

Bei den beiden Ausführungsbeispielen nach Fig.1 und 2 kann nach der Kontrollstation 4 bzw. der Rutsche 7, 7' auch eine in Fig.5 veranschaulichte Einrichtung 32 zur Ausschleusung von jenen einzelnen Stückgütern 3 angeordnet sein, bei denen das Kontrollergebnis negativ war. Beispielsweise besteht diese Einrichtung 32 aus einer an die Rutsche 7, 7' anschließenden Rutsche 33, an der ein über den Rechner elektrisch oder pneumatisch betätigbarer Schwenkarm 34 vorgesehen ist, der die als fehlerhaft erkannten Stückgüter 3 seitlich zum Rand der Rutsche 33 ablenkt, damit diese anschließend in einen dort vorgesehenen Behälter 35 fallen. Anstelle des Schwenkarmes 34 kann auch eine Fallklappe (nicht dargestellt) vorgesehen werden.

Stückgüter 3 mit positivem Kontrollergebnis gelangen hingegen über die Rutsche 33 entweder direkt auf ihre Förderstrecke oder in einen Behälter 13 bzw. 16 auf der Förderstrecke 14 bzw. 26', um zur Ausgabe- bzw. Verpackungsstation geleitet zu werden.

## Patentansprüche

1. Vorrichtung zur Kontrolle von zu einem Kommissionierauftrag gehörenden, auf einer Förderstrecke (1) bewegbaren Stückgütern (3) hinsichtlich Produktart und Anzahl der Stückgüter (3) mit Hilfe von mit einem Rechner (4') verbundenen optischen bzw. optoelektronischen, jeweils eine optische Achse aufweisenden, automatisch arbeitenden Erkennungseinrichtungen (10), denen die Stückgüter (3) auf der Förderstrecke (1) zugeführt werden, **dadurch gekennzeichnet, dass** die Förderstrecke (1) einen eine Durchsicht ermöglichenden, die Stückgüter automatisch in der Förderer-Erstreckungsrichtung bewegenden Förderer in Form einer zumindest teilweise transparenten Rutsche (7), einer Röllchenbahn (27) oder von zwei einen Spalt zwischen einander freilassenden Förderbändem enthält und die Erkennungseinrichtungen (10) jeweils mit ihrer optischen Achse in einer Querebene zur Erstreckungsrichtung dieses Förderers so im Durchsicht-Bereich angeordnet sind, daß die Stückgüter (3) im Zuge ihrer automatischen Bewegung durch den Durchsicht-Bereich automatisch erkannt werden.

2. Vorrichtung nach Anspruch 1, **dadurch gekennzeichnet, dass** der Förderstrecke (1) eine Behälter-Entleerstation (18) zugeordnet ist und die Förderstrecke (1) eine Ausricht- und Ver einzelungsstation (20) aufweist, nach der in Förderrichtung der die Durchsicht ermöglichende Förderer mit den Erkennungseinrichtungen (10) folgt.

3. Vorrichtung nach Anspruch 1 oder 2, **dadurch gekennzeichnet, dass** die Rutsche (7) einen V-förmigen Querschnitt aufweist.

4. Vorrichtung nach Anspruch 3, **dadurch gekennzeichnet, dass** die Schenkel (8, 9) der Rutsche (7) zueinander einen Winkel von 90° einschließen.

5. Vorrichtung nach einem der Ansprüche 1 bis 4, **dadurch ge kennzeichnet**, dass nach den Erkennungseinrichtungen (10) eine Einrichtung (32) zum automatischen Ausschleusen der Stückgüter (3) angeordnet ist.

6. Vorrichtung nach einem der Ansprüche 1 bis 5, **dadurch gekennzeichnet, dass** als Erkennungseinrichtungen (10) zumindest zwei Scanner oder Videokameras (11a, 11d) hinsichtlich der Ausrichtung ihrer optischen Achsen einander gegenüberliegend angeordnet sind.

7. Vorrichtung nach Anspruch 6, **dadurch gekennzeichnet, dass** vier Scanner oder Videokameras (11a bis 11d) einander paarweise gegenüberliegend angeordnet sind.

8. Vorrichtung nach einem der Ansprüche 1 bis 7, **dadurch gekennzeichnet, dass** im Bereich der Erkennungseinrichtungen (10) eine Stoppeinrichtung (29) für die Stückgüter (3) angeordnet ist.

9. Vorrichtung nach Anspruch 8, **dadurch gekennzeichnet, dass** die Stoppeinrichtung (29) einen Elektromagneten (30) aufweist.

10. Vorrichtung nach einem der Ansprüche 2 bis 9, **dadurch gekennzeichnet, dass** die Ausricht- und Vereinzelungsstation (20) aus mehreren, beispielsweise seitlich zueinander versetzten, mit unterschiedlichen Geschwindigkeiten transportierenden Förderstrecken (21, 22, 23) gebildet ist.

11. Vorrichtung nach Anspruch 10, **dadurch gekennzeichnet, dass** zumindest die erste Förderstrecke (21, 22) mit Leitblechen (24, 25) zum Überleiten der Stückgüter (3) zur nachfolgenden Förderstrecke (22, 23) versehen ist.

12. Vorrichtung nach Anspruch 10 oder 11, **dadurch gekennzeichnet, dass** die Fördergeschwindigkeiten (V1, V2, V3) von Förderstrecke (21, 22) zu Förderstrecke (22, 23) zunehmen.

## Claims

1. An arrangement for checking items (3) belonging to a commissioning order and movable on a conveyor path (1), with respect to product type and number of items (3), by aid of automatically operating optical, or opto-electronical, respectively, sensing devices (10) connected with a computer (4') and each having an optical axis, the items (3) being supplied on the conveyor path (1) to the sensing devices, **characterised in that** the conveyor path (1) comprises a conveyor allowing for an inspection therethrough and automatically moving the items in the extension direction of the conveyor and having the form of an at least partially transparent chute (7), a path (27) of small rollers or of two conveyor belts with a clear gap therebetween, and each one of the sensing devices (10) is arranged such that its optical axis is arranged in a transverse plane to the extension direction of this conveyor in the inspection region thereof such that the items (3) in the course of their automatic movement through the inspection region are automatically sensed.

2. An arrangement according to claim 1, **characterised in that** the conveyor path (1) has an associated container-emptying station (18) and the conveyor path (1) has an aligning and individualizing station (20) followed, in conveying direction, by the inspection-enabling conveyor with the sensing devices (10).

3. An arrangement according to claim 1 or 2, **characterised in that** the chute (7) has a V-shaped cross-section.

4. An arrangement according to claim 3, **characterised in that** the legs (8, 9) of the chute (7) enclose an angle of 90° with each other.

5. An arrangement according to any one of claims 1 to 4, **characterised in that** the sensing devices (10) are followed by a device (32) for automatically transferring the items (3) outwardly.

6. An arrangement according to any one of claims 1 to 5, **characterised in that** as the sensing devices (10), at least two scanners or video cameras (11a, 11d) are arranged opposite each other with respect to the orientation of their optical axes.

7. An arrangement according to claim 6, **characterised in that** four scanners or video cameras (11a to lid) are arranged opposite each other in pairs.

8. An arrangement according to any one of claims 1 to 7, **characterised in that** a stopping device (29) for the items (3) is arranged in the region of the sensing devices (10).

9. An arrangement according to claim 8, **characterised in that** the stopping device (29) comprises a solenoid (30).

10. An arrangement according to any one of claims 2 to 9, **characterised in that** the aligning and individualizing station (20) is formed by several, e.g. laterally offset, conveyor paths (21, 22, 23) conveying at different speeds.

11. An arrangement according to claim 10, **characterised in that** at least the first conveyor path (21, 22) is provided with directing plates (24, 25) for directing the items (3) towards the consecutive conveyor path (22, 23).

12. An arrangement according to claim 10 or 11, **characterised in that** the conveying speeds (V1, V2, V3) increase from conveyor path (21, 22) to conveyor path (22, 23).

## Revendications

1. Dispositif pour contrôler des marchandises (3) faisant partie d'un ordre de préparation de commande et déplaçables sur une section de convoyage (1), et ce en ce qui concerne le type de produit et le nombre des marchandises (3), à l'aide de dispositifs optiques ou optoélectroniques d'identification (10), qui sont reliés à un calculateur (4'), qui possèdent chacun un axe optique, qui travaillent de façon automatique et auxquels les marchandises (3) sont amenés sur la section de convoyage (1), **caractérisé en ce que** la section de convoyage (1) contient un convoyeur, qui permet une observation par transparence, qui déplace automatiquement les marchandises dans la direction d'extension du convoyeur et qui se présente sous la forme d'une goulotte au moins partiellement transparente (7), d'une table à petits rouleaux (27) ou de deux bandes convoyeuses qui laissent subsister entre elles une fente, et que les dispositifs d'identification (10) sont disposés respectivement de telle sorte que leur axe optique est situé dans un plan transversal par rapport à la direction dans laquelle s'étend ce convoyeur dans la zone d'observation transparente, de sorte que les marchandises (3) sont identifiées automatiquement lors de leur déplacement automatique, à travers la zone d'observation transparente.

2. Dispositif selon la revendication 1,
**caractérisé en ce qu'**à la section de convoyage (1) est associée un poste (18) de vidage de récipients et que la section de convoyage (1) comporte un poste d'alignement et d'individualisation (20), en aval duquel est disposé, dans la direction de convoyage, le convoyeur, qui permet l'observation en transparence et les dispositifs d'identification (10).

3. Dispositif selon la revendication 1 ou 2,
**caractérisé en ce que** la goulotte (17) possède une section transversale en forme de V.

4. Dispositif selon la revendication 3,
**caractérisé en ce que** les branches (8, 9) de la goulotte (7) font entre elles un angle de 90°.

5. Dispositif selon l'une des revendications 1 à 4, **caractérisé en ce qu'**en aval du dispositif d'identification (10) est disposé un dispositif (32) servant à l'extraction automatique, comme dans un sas, des marchandises (3).

6. Dispositif selon l'une des revendications 1 à 5, **caractérisé en ce qu'**au moins deux scanners ou deux caméras vidéo (11a, 11d) sont disposés, en tant que dispositifs d'identification (10), à l'opposé l'un de l'autre en ce qui concerne l'orientation de leurs axes optiques.

7. Dispositif selon la revendication 6,
**caractérisé en ce que** quatre scanners ou caméras vidéo (11a à 11d) sont disposés réciproquement en vis-à-vis par couples.

8. Dispositif selon l'une des revendications 1 à 7, **caractérisé en ce qu'**un dispositif d'arrêt (29) pour les marchandises (3) est disposé dans la zone des dispositifs d'identification (10).

9. Dispositif selon la revendication 8,
**caractérisé en ce que** le dispositif d'arrêt (29) comporte un électroaimant (30).

10. Dispositif selon l'une des revendications 2 à 9, **caractérisé en ce que** le poste d'orientation et d'individualisation (20) est formé de plusieurs sections de convoyage, qui sont décalées par exemple latéralement les unes par rapport aux autres et effectuent le transport avec des vitesses différentes.

11. Dispositif selon la revendication 10,
**caractérisé en ce qu'**au moins la première section de convoyage (21, 22) est pourvue de chicanes (24, 25) servant à transférer les marchandises (3) vers la section de convoyage suivante (22, 23).

12. Dispositif selon la revendication 10 ou 11, **caractérisé en ce que** les vitesses de convoyage (V1, V2, V3) augmentent d'une section de convoyage (21, 22) à une autre section de convoyage (22, 23).
